# EUROPEAN PATENT APPLICATION

(11) **EP 1 720 091 A1**
(43) Date of publication of application: **08.11.2006**
(21) Application number: 05009626.2
(22) Date of filing: 02.05.2005
(51) Int. Cl.: G06F 3/033

(54) **Display device for efficient scrolling**

(71) Applicant: SIEMENS AKTIENGESELLSCHAFT, 80333 München (DE)
(72) Inventor: Pessoa, Pedro, Lisboa (PT)

(57) **Abstract**

The present invention proposes to logically divide or partition a display or a display window into at least two sections and to have the scrolling direction to depend on which section a pointer is placed. Such a display device comprises
a display for displaying visual information, a navigating mechanism for displacing a pointer on the display, and a scrolling mechanism for scrolling visual information on the display with the scrolling direction determined by the section where the pointer is positioned. The invention allows for a flexible and user-friendly choice and an easy change of scrolling directions.

## Description

The present invention relates to scrolling visual information on a display.

Information technology has spawned a multitude of ways how information can be accessed, processed and put to use. For people to deal with increasing amounts of information visual display has evolved as the primary way of representation. In the realm of information treatment display facilities are ubiquitous with the facilities frequently assigned to personal computers.

An omnipresent tool in handling information presented on a display or a screen is provided by navigation devices such as a computer mouse. In portable devices such as a laptop computer a computer mouse function is usually integrated in the device, which thus allows for navigation by means of a touch-sensitive field or zone as opposed to a physical computer mouse in the case of stationary computers. Commonly, navigation devices permit the user to move and direct a pointer to information on a display in order to access functions associated with pieces of information (e.g. links to further information sources) or to manipulate parts of the information shown on the display (e.g. reword, copy, delete, ..).

The mouse features usually are enhanced by a scrolling feature, which allows for scrolling information displayed on a display by help of a scrolling mechanism. Mostly, input or navigation devices such as keyboard or computer mouse are equipped with scrolling wheels. By turning the scrolling wheel the information on the display is moved in the direction in which the wheel is turned.

Since a screen is two-dimensional there is a need to provide for scrolling in four directions (usually up, down, left, and right). Most computer systems only allow for two scrolling directions, i.e. up and down. An enhancement for four directions was proposed in the document US 5,805,161 where scroll boxes may be selected that determine the scroll direction.

The aim of the invention is to provide for a user-friendly, easy-to-use way for changing scrolling directions.

The present invention proposes to logically divide or partition a display or a display window into at least two sections and to have the scrolling direction to depend on which section the pointer is placed. Such a display device comprises
- a display or screen for displaying visual information,
- a navigating mechanism or device for moving or displacing a pointer on the display, such as a computer mouse, and
- a scrolling mechanism for scrolling visual information on the display, such as a scrolling wheel
with the scrolling direction determined by the section where the pointer is positioned.

The present invention allows for a flexible and user-friendly choice and an easy change of scrolling directions. To guide the user in choosing a scrolling direction a visual feedback may be provided that indicated the direction of scrolling. Such a feedback could consist of an indication shown on the screen such as providing for (temporary) blinking of the active sector or a scroll bar presenting the scroll direction. This visual feedback may be provided (for a short time) as the user starts scrolling.

The partitioning of the display into sections may be achieved by help of at least one logical line dividing the screen into areas or sectors. Such a line may be visible, temporarily visible, e.g. for indicating the active sector, or not visible.

According to an embodiment of the present invention the scrolling speed is made dependent on the position of the pointer on the display. For example, the screen may be divided into zones intersecting the sectors, which determine the scrolling direction, and the zones be assigned different scrolling speeds. A convenient arrangement of sectors and zones is constituted by sections being delineated by one or more logical lines with the line or the lines passing through the central point of the screen and the zones being formed by rings or circular lines circling around the central point. Thus, the speed depends on the distance to the central point. The dependence of the scrolling speed on the distance to the central point can also be chosen to be a continuous variation of scrolling speed instead of a stepwise one.

Computer systems comprising display devices are easily provided with software means for the display to function according to the present invention. Suitable software should be programmed to recognize or identify the section where the pointer is placed and to activate a scrolling direction accordingly. In case of an embodiment with variable scrolling speed the position of the pointer is to be used by the software to identify and activate the chosen scrolling speed.

Below embodiments of the invention are described with reference to figures. The figures show
- Fig. 1a and 1b:: Screen divided into two sections via a diagonal line extending from left top to right bottom
- Fig. 2a and 2b:: Screen divided into two sections via a diagonal line extending from left bottom to right top
- Fig. 3a and 3b:: Screen divided into four sections via two diagonal lines
- Fig. 4a and 4b:: Screen divided into eight sections via four diagonal lines
- Fig: 5a and 5b:: Screen divided into four sections via four diagonal lines and four zones via three circles

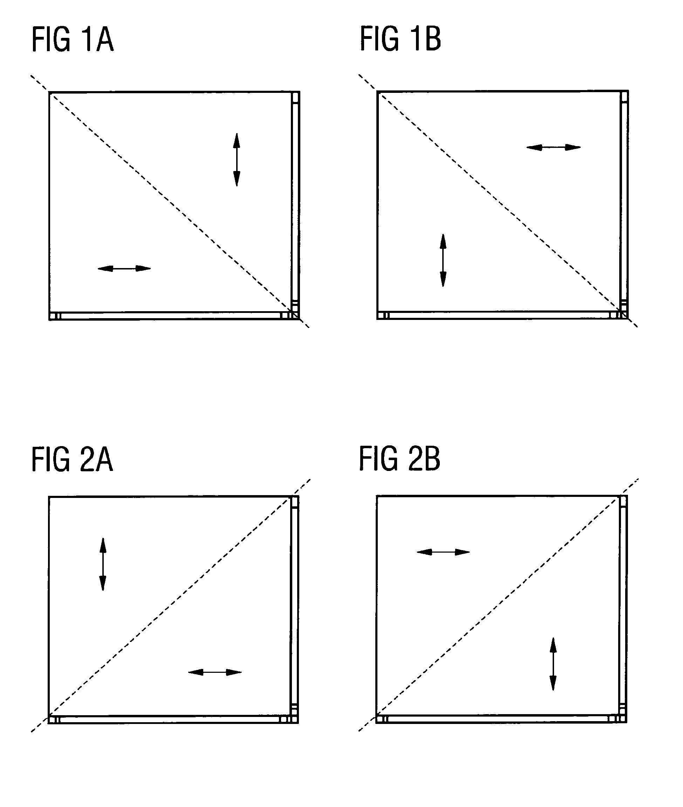

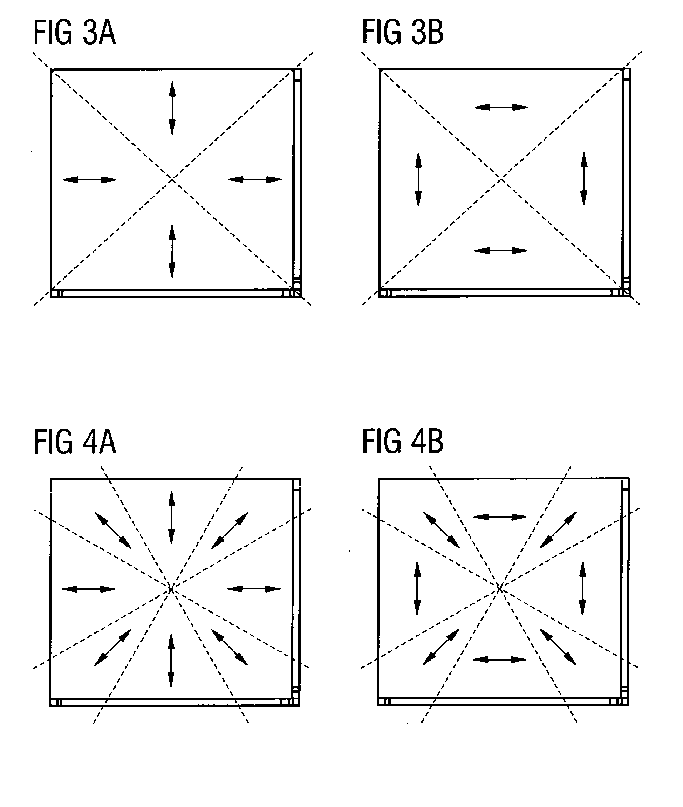

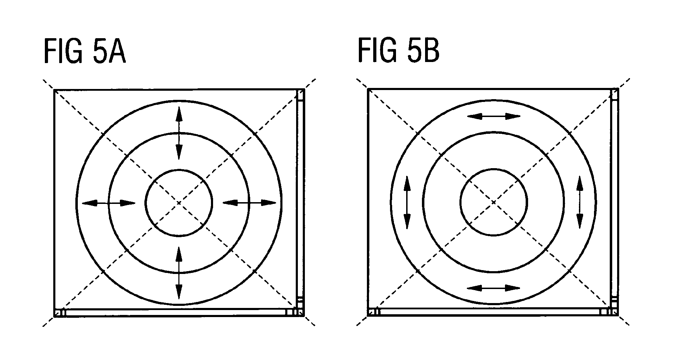

The figures show a screen divided into sectors. Arrows indicate the scrolling direction when the pointer is placed on a point of the respective sector. On the right side and on the bottom scroll bars are shown. This scroll bars may blink when the corresponding direction is chosen. As figures 1a to 4b demonstrate there are numerous options with respect to the number of sections and the assignment of scrolling directions to the individual sectors. Preferentially, the scrolling directions are perpendicular (Fig. 1a to Fig. 3b). It is possible to introduce more that four scrolling directions (Fig. 4a and Fig. 4b) Figures 5a and 5b also show circles or circular lines that delimit four zones (area within inner circle, are between inner and middle circle, area between middle circle and outer circle, and area outside outer circle). The individual zones determine the scrolling speed, e.g. the speed increasing from outer to inner zones.

The inventive concept is not limited by the embodiments presented as a person skilled in the art will readily appreciate. For instance, there are many more evident ways to provide for sectors or zone. In addition, the dependency of the scrolling speed on the position of the pointer may be continuous. The orientation of the lines delimiting or delineating sectors and/or zones may be chosen in accordance to the form of the display window where visual information is to be scrolled.

## Claims

1. A display device, comprising
- a display for displaying visual information,
- a navigation mechanism for moving a pointer on the display
- a scrolling mechanism for scrolling visual information on the display, **characterized in that**
- the display or a display window of the display device is logically partitioned into at least two sections, and
- the scrolling direction is determined by the section where the pointer is placed.

2. The display device of claim 1,
**characterized in that**
a visual feedback indicating direction of scrolling is provided.

3. The display device of claim 1 or 2,
**characterized in that**
the display is partitioned into sections by at least one logical line.

4. The display device of one of the preceding claims,
**characterised in that**
the scrolling speed is dependent on the position of the pointer on a section of the display.

5. The display device of claim 4,
**characterised in that**
- the sections are delineated by one ore more logical lines with the line or the lines running through the centre of a display window, and
- the scrolling speed is dependent on the distance of the pointer from the centre of the display window.

6. A method to support scrolling on a display or display window of a display device according to one of the preceding claims, including the steps of
- identifying the section where the pointer is placed, and
- activating a scrolling direction according to the section.

7. The method of claim 6, further comprising
- identifying the position of the pointer, and
- setting a scrolling speed according to the position.
